Europäisches Patentamt

European Patent Office

Office européen des brevets

(11) Veröffentlichungsnummer: **0 393 483**
**A2**

(12) **EUROPÄISCHE PATENTANMELDUNG**

(21) Anmeldenummer: **90106893.2**

(22) Anmeldetag: **10.04.90**

(51) Int. Cl.⁵: **F16H 13/10**

(30) Priorität: **15.04.89 DE 3912493**

(43) Veröffentlichungstag der Anmeldung:
**24.10.90 Patentblatt 90/43**

(84) Benannte Vertragsstaaten:
**DE FR GB IT NL SE**

(71) Anmelder: **DÜPRO AG**
**Industriestrasse 6**
**CH-8590 Romanshorn(CH)**

(72) Erfinder: **Jonischus, Jürgen**
**Alpsteinstrasse 26**
**CH-8590 Romanshorn(CH)**

(74) Vertreter: **Jackisch, Walter, Dipl.-Ing. et al**
**Patentanwalt W. Jackisch & Partner**
**Menzelstrasse 40**
**D-7000 Stuttgart 1(DE)**

(54) Stelleinrichtung für ein Reibradgetriebe.

(57) Die Erfindung betrifft eine Stelleinrichtung für ein Reibradgetriebe in einem Saugwerkzeug. Zur Einstellung der Anpresskraft zwischen einem Reibrad (5) und einem Antriebsrad (3) des Rreibradgetriebes (6) ist vorgesehen, eines der Räder an einem um eine Schwenkachse (19) verschwenkbaren Hebel (10) anzuordnen. Bekannte Stelleinrichtungen sind konstruktiv aufwendig und umständlich handhabbar. Gemäß der Erfindung ist vorgesehen, am Hebel (10) einen die Anpresskraft aufbringenden Nocken (32) anzulegen, der in seinem Abstand zur Schwenkachse (19) des Hebels (10) veränderbar ist. Auf diese Weise wird konstruktiv einfach ein die Anpresskraft zur Verfügung stellendes Bauteil bereitgestellt, durch dessen Drehung um seine Längsachse gleichzeitig eine einfache Einstellung der Anpresskraft ermöglicht ist.

Fig. 1

## Stelleinrichtung für ein Reibradgetriebe

Die Erfindung betrifft eine Stelleinrichtung für ein Reibradgetriebe nach dem Oberbegriffs des Anspruches 1.

Bei einem Reibradgetriebe wird die Umfangsfläche eines Reibrades an die Umfangsfläche eines Gegenrades (Antriebsrades) angedrückt. Die aufeinander abrollenden Mantelflächen der Räder sind so ausgebildet und gepaart, daß ein hoher Reibschluß erzielt ist, um eine möglichst schlupffreie Übertragung eines maximalen Drehmomentes bei geringstem Anpressdruck zu erzielen.

Zum Einstellen eines optimalen Anpressdruckes ist bekannt, z.B. den Antriebsmotor des Reibradgetriebes auf einer verstellbaren Halterung anzuordnen, deren Lage durch Federkraft, Stellschrauben oder andere Stelleinrichtungen so verändert werden kann, daß das auf der Motorwelle befestigte Antriebsrad mit der zur Übertragung des gewünschten Drehmomentes erforderlichen Kraft gegen das anzutreibenden Rad gedrückt wird.

Es ist auch bekannt, daß das getriebene Rad in seinem Achsabstand zum festliegenden Antriebsrad unter Verwendung entsprechender Stelleinrichtungen zu verlagern, um den gewünschten Anpressdruck zur Erzielung des erforderlichen Reibschlusses einzustellen.

Alle bekannten Verstelleinrichtungen sind konstruktiv sehr aufwendig und in ihrer Handhabung umständlich. Sie eignen sich in der Regel zwar für großindustrielle Anwendungen, sind jedoch für den Einsatz in kleingewerblicher Anwendung und im Haushalt kaum geeignet. Insbesondere ihre Handhabung ist für einen Endverbraucher sehr umständlich.

Der Erfindung liegt die Aufgabe zugrunde, eine einfach aufgebaute und leicht einstellbare Stelleinrichtung für das Räderpaar eines Reibradgetriebes zu schaffen, die kostengünstig in Mengenfertigung herstellbar ist und eine einfache Handhabung gewährleistet.

Diese Aufgabe wird nach den kennzeichnenden Merkmalen des Anspruches 1 gelöst.

Die Bereitstellung der die Anpresskraft aufbringenden Betätigungskraft über einen Nocken ermöglicht eine einfache konstruktive Ausbildung, die den Einsatz einer kostengünstigen Massenfertigung zuläßt. Durch Verschieben des Nockens am Hebel ist in einfacher Weise der wirksame Hebelarm veränderbar, wodurch eine feinfühlige Einstellung der gewünschten Anpresskraft möglich wird, die auch von einem Laien sicher ausgeführt werden kann.

In vorteilhafter Weiterbildung der Erfindung ist der Nocken Teil eines Stellbolzens und ragt aus dessen Mantelfläche hervor. Der Stellbolzen ist in einem Gehäuse der Stelleinrichtung um seine Längsachse drehbar gehalten, so daß durch einfache Drehung des Stellbolzens die Lageänderung des Nockens zur Schwenkachse möglich wird.

Bevorzugt ist der Nocken über einen ersten Federbügel mit dem Kopfbereich des Stellbolzens und über einen zweiten Federbügel mit dem freien Ende des Schaftes des Stellbolzens verbunden, so daß die die Anpresskraft bereitstellende Kraft des Nockens von den Federbügeln aufgebracht wird.

Weitere Merkmale der Erfindung ergeben sich aus den weiteren Ansprüchen, der Beschreibung und der Zeichnung, in der ein nachfolgend im einzelnen beschriebenes Ausführungsbeispiel dargestellt ist.

Es zeigen:

Fig. 1 im Teilschnitt eine Seitenansicht auf eine erfindungsgemäße Verstelleinrichtung eines Reibradgetriebes,

Fig. 2 eine Darstellung der Verstelleinrichtung gemäß Fig. 1 mit verändertem Hebelarm,

Fig. 3 im Teilschnitt die Seitenansicht eines zweiarmigen Hebels der Verstelleinrichtung,

Fig. 4 eine Ansicht des Stellgliedes der Verstelleinrichtung,

Fig. 5 einen Teilschnitt durch das Gehäuse der Verstelleinrichtung.

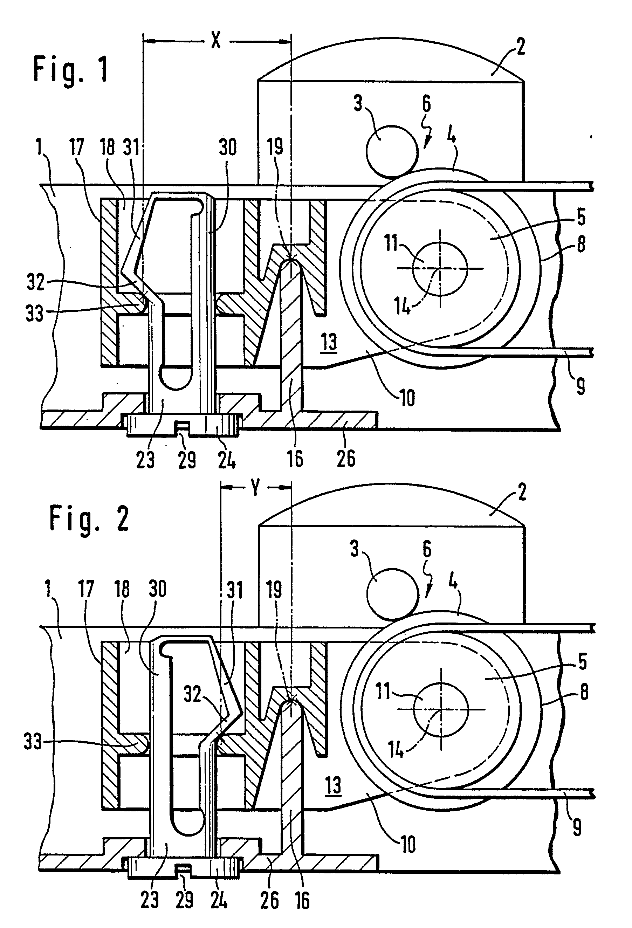

Das Gehäuse 1 der Verstelleinrichtung ist vorzugsweise einteilig mit dem Gehäuse eines Saugwerkzeuges für ein Saugreinigungsgerät ausgebildet. In diesem Gehäuse (Fig. 1, 2) ist eine nicht dargestellte rotierende Bürste vorgesehen, die über ein Reibradgetriebe 6 von einem Elektromotor 2 angetrieben ist. Das auf der Motorwelle sitzende Antriebsrad 3 des Elektromotors 2 liegt auf dem Reibbelag 4 eines Reibrades 5 auf. Das getriebene Reibrad 5 weist eine mittige, im Durchmesser abgesetzte, ringscheibenförmige Auflagefläche 8 im Außenmantel vor. Auf der Auflagefläche 8 liegt ein Antriebsriemen 9 auf, der die nicht dargestellte Bürste rotierend antreibt.

Die beiderseits der Auflagefläche 8 radial überstehende Mantelfläche des Reibrades 5 liegt höher als der aufgelegte Antriebsriemen 9 und bildet 2 Ringmantelflächen für den Reibbelag 4. Zur Erzielung eines schlupffreien Antriebes wird das Reibrad 5 an das Antriebsrad 3 des Elektromotors 2 angedrückt.

Zur Einstellung des erforderlichen Anpressdruckes ist der Achsabstand des Reibrades 5 zum Antriebsrad 3 einstellbar. Hierzu kann entweder das Antriebsrad 3 oder das getriebene Reibrad 5 verstellt werden. Im gezeigten Ausführungsbeispiel ist das Reibrad 5 in seinem Achsabstand gegenüber dem Antriebsrad 3 veränderbar.

Das Reibrad 5 ist im Ausführungsbeispiel (Fig.

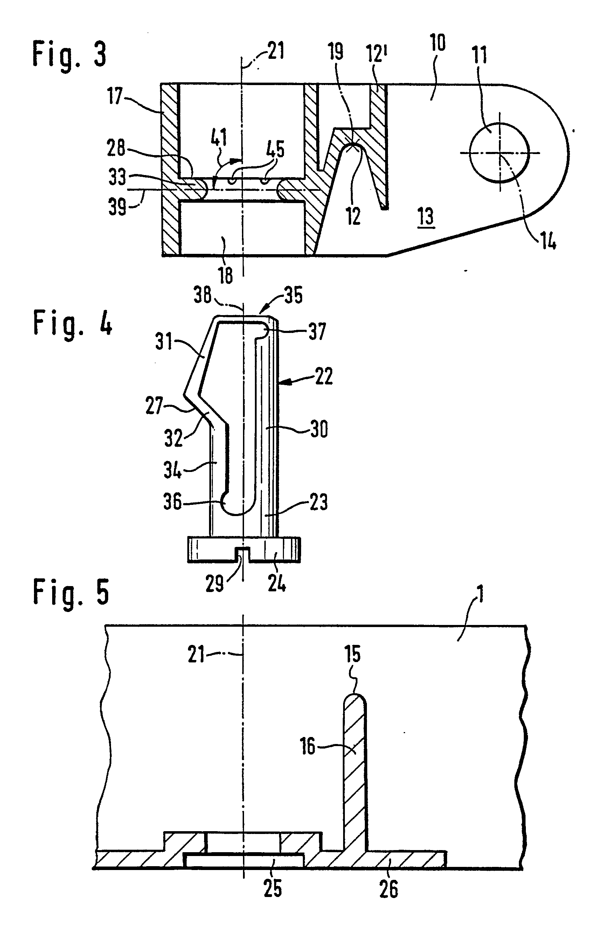

1, Fig. 2) am Ende eines zweiarmigen Hebles 10 (Fig. 3) angeordnet, welcher etwa in der Mitte seiner Längsersteckung gelagert ist. Vorzugsweise ist am Hebel 10 eine Lagermulde 12 vor gesehen, mit welcher der Hebel 10 auf einer Lagerkuppe 15 eines gehäusefesten Lagerbockes 16 aufliegt. Der Lagerbock und die Lagerkuppe erstrecken sich parallel zur Drehachse des Reibrades 5. Der Wölbungsradius der Lagerkuppe 15 und der Wölbungsradius der Lagermulde 12 sind so aufeinander abgestimmt, daß eine Art "Schneidenlager" gebildet ist. Der Hebel 10 kann so eine begrenzte Schwenkbewegung um die Lagerkuppe 15 des Lagerbockes 16 ausführen. Die Schwenkachse 19 verläuft dabei parallel zur Drehachse des Reibrades 5. Die Lagermulde 12 übergreift die Lagerkuppe 15 allseitig, so daß sich der Hebel 10 gegenüber dem Lagerbock 16 nicht verschieben kann.

Der vorzugsweise zweiarmig ausgebildete Hebel 10 (Fig. 3) besteht aus einer Seitenwand 13, die in der Mitte ihrer Längserstreckung einen die Lagermulde 12 bildenden Gehäuseteil 12′ aufweist. An dem einen Ende des Hebels 10 ist ein Lagerbolzen 11 zur Lagerung des Reibrades 5 vorgesehen, der auch die Drehachse 14 des Reibrades bestimmt. Die Drehachse 14 liegt lotrecht zur Seitenwand 13, ebenso wie die durch die Lagermulde 12 bestimmte Schwenkachse 19 des Hebels 10. Das dem Zapfen 11 gegenüber liegende Ende 17 des Hebels 10 weist ein Gehäuseteil mit einer Aufnahmebohrung 18 auf, deren Mittelachse 21 in einer zur Seitenwand 13 parallelen Ebene liegt. Vorzugsweise liegt die Mittelachse 21 der Aufnahmebohrung 18 im rechten Winkel zur Längsmittelachse des Hebels 10.

In der am Ende 17 des Hebels 10 angeordneten Aufnahmebohrung 18 ist ein innerer Ringflansch 33 angeordnet, dessen Ebene 39 vorzugsweise in einem rechten Winkel 41 zur Mittelachse 21 liegt.

Es kann vorteilhaft sein, den Ringflansch derart anzuordnen, daß seine Ebene 39 unter einem vom rechten Winkel 41 verschiedenen Winkel zur Mittelachse 21 liegt.

In der Aufnahmebohrung 18 liegt ein Schaft 22 eines als Stellbolzen 23 ausgebildeten Stellgliedes, dessen Kopf 24 in einer gehäusefesten Ansenkung 25 (Fig. 5) eines Wandteiles 26 des Gehäuses 1 liegt. Zum Verdrehen des Stellbolzens 23 um seine Längsachse 38 ist dessen Kopf 24 vorzugsweise mit einer Nut 29 versehen, in welche ein Werkzeug z.B. ein Schraubendreher, eine Münze oder dgl. eingreift.

Der Schaft 22 des Stellbolzens 23 (Fig. 4) ist aus einem starren axialen Führungsteil 30 und Federbügeln 31, 34 gebildet. Das starre Führungsteil 30 ist etwa halbkreisförmig ausgebildet. Der erste Federbügel 34 erstreckt sich vom Kopf 24 bis etwa auf die halbe Länge des Schaftes 22 parallel zum Führungsteil 30. Auf halber Schaftlänge schließt an den Federbügel 3 4 ein schräg nach außen geneigter aus der Mantelfläche des Schaftes 22 herausragender Nocken 32 an. An das freie Ende des Nockens 32 ist ein zweiter Federbügel 31 angeschlossen, der schräg radial nach innen gerichtet zum freien Schaftende 35 verläuft.

Die Höhe des Lagerbockes 16 (Fig. 5) und die Länge des Schaftes 22 (Fig. 4) sind so aufeinander abgestimmt, daß der Nocken 32 mit seiner dem Kopf 24 des Stellbolzens 23 zugewandten Nockenfläche 27 an der dem Kopf 24 abgewandten Ringfläche 28 des Ringflansches 33 anliegt. Der Ringflansch 33 liegt somit zwischen dem Kopf 24 des Stellbolzens 23 und dem Nocken 32. Durch Verdrehen des Stellbolzens 23 um seine Längsachse 38 liegt der auf der Ringfläche 28 aufliegende Nocken 32 in einer Stellung (Fig. 1) mit einem Größenabstand "X" zur Schwenkachse 19 des Hebels 10 (Fig. 1) und in einer anderen Stellung mit einem kleinsten Abstand "Y" zur Schwenkachse 19 des Hebels 10 (Fig. 2). Zwischen diesen beiden Stellungen ist jede beliebige Stellung zur Einstellung eines Abstandes möglich. Durch die Veränderung des Abstandes wird der Hebelarm zwischen den Nocken 32 und der Schwenkachse 19 von seiner maximalen Länge "X" und bis zu einer minimalen Länge "Y" verändert, wodurch sich die Anpresskraft des am anderen Ende des Hebels 10 gelagerten Reibrades 5 verändert.

Die vom Nocken 32 aufgrund der Federwirkung der Federn 31 und 34 ausgeübte Druckkraft auf die Ringfläche 33 bleibt beim Verdrehen des Stellbolzens 23 und seiner Achse vorzugsweise unverändert; durch die Änderung des Hebelarmes ist jedoch die Anpresskraft des Reibrades 5 an das Antriebsrad 3 feinfühlig einstellbar.

Der Anschlußbereich der Federbügel 31 und 34 zum Führungsteil 30 des Stellbolzens 23 ist mit halbkreisförmigen Schwachstellen 36 und 37 ausgeführt. Die hierdurch erzielte Elastizität ermöglicht eine elastische Verformung der Federbügel 31 in radialer Richtung zum Einstecken des Stellbolzens 23 in die Aufnahmebohrung 18 am Hebel 10 bei der Montage des Stellbolzens 23. Die elastische Verformung der Federbügel 31 und 34 beim anliegenden Reibrad 5 am Antriebsrad 3 stellt die erforderliche Anpresskraft zur Verfügung.

Um den Stellbolzen 23 gegen unbeabsichtigtes Verdrehen, z.B. durch Erschütterungen beim Betrieb des Gerätes zu sichern, kann die Ringfläche 28 mit Rastnuten 45 versehen sein, in welche der Nocken 32 einrastet.

Die erfindungsgemäße Ausgestaltung des Stellbolzens 23 ermöglicht seine einteilige Herstellung mit Schaft 22, dem Kopf 24, den Federbügeln 31 und 34 sowie den Nocken 32 als Kunststoffgießteil.

Ebenso kann der Hebel 10 als einteiliges Kunststoffteil gefertigt sein, wie auch das Gehäuse 1 der Verstelleinrichtung, welches vorzugsweise mit dem Gehäuse des Saugreinigungswerkzeuges einteilig ausgeführt ist. Damit ist eine einfach Fertigung und Montage der Stelleinrichtung bei einfachster Einstellung der Anpresskraft für das Reibradgetriebe erzielt.

Es kann zweckmäßig sein, anstatt des im Ausführungsbeispiel beschriebenen zweiarmigen Hebels 10 einen einarmigen Hebel anzuordnen. Hierbei ist jedoch zu berücksichtigen, daß bei Anordnung eines federnden Stellbolzens zwischen der Drehachse 14 des Reibrades 5 und dem Schneidenlager 12/15 die aufgebrachte Kraft im Sinne eines Veringerns des Achsabstandes zwischen Reibrad und Antriebsrad wirken muß.

**Ansprüche**

1. Stelleinrichtung für ein Reibradgetriebe, insbesondere für ein Reibradgetriebe in einem Saugwerkzeug eines Saugreinigungsgerätes, wobei zur Einstellung der Anpresskraft zwischen dem Reibrad (5) und einem Gegenrad (3) das eine Rad des Reibradgetriebes (6) an einem um eine Schwenkachse (19) verschwenkbaren Hebel (10) gelagert ist,
dadurch gekennzeichnet, daß am Hebel (10) ein die Anpresskraft aufbringender Nocken (32) anliegt, der in seinem Abstand zur Schwenkachse (19) des Hebels (10) veränderbar ist.

2. Stelleinrichtung nach Anspruch 1,
dadurch gekennzeichnet, daß der Nocken (32) federnd abgestützt ist und vorzugsweise unter einer Vorspannkraft am Hebel (10) anliegt.

3. Stelleinrichtung nach Anspruch 1 oder 2,
dadurch gekennzeichnet, daß der Nocken (32) als Teil eines Stellbolzens (23) aus dessen Mantelfläche hervorsteht und der Stellbolzen (23) in einem Gehäuse (1) der Stelleinrichtung um seine Längsachse (38) drehbar gehalten ist.

4. Stelleinrichtung nach einem der Ansprüche 1 bis 3,
dadurch gekennzeichnet, daß der Nocken (32) durch mindestens einen Federbügel (31, 34) gehalten ist, der einen Teil des Schaftes (22) des Stellbolzens (23) bildet, wobei der Nocken (32) vorzugsweise über einen ersten Federbügel (34) mit dem Kopfbereich des Stellbolzens (23) und über einen zweiten Federbügel (31) mit dem freien Ende (35) des Schaftes (22) des Stellbolzens verbunden ist und insbesondere der Übergangsbereich vom Schaft (22) zum Federbügel (31, 34) durch Gelenke bildende Schwachstellen (36, 37) ausgebildet ist.

5. Stelleinrichtung nach einem der Ansprüche 1 bis 4,

dadurch gekennzeichnet, daß ein sich um den Schaft (22) des Stellbolzens (23) erstreckender Ringflansch (33) dem Nocken (32) als Gegenfläche (28) des Hebels (10) zugeordnet ist, wobei der Ringflansch (33) vorzugsweise in einer vom Stellbolzen durchragten Aufnahmebohrung (18) am Hebel (10) angeordnet ist.

6. Stelleinrichtung nach einem der Ansprüche 1 bis 5,
dadurch gekennzeichnet, daß der Nocken (32) zur Längsachse (38) des Stellbolzens geneigt ist.

7. Stelleinrichtung nach einem der Ansprüche 3 bis 6,
dadurch gekennzeichnet, daß der Stellbolzen (23) mit seinem Schaft (22) und dem Kopf (24) sowie den Federbügeln (31, 34) und dem Nocken (32) einteilig ausgebildet ist.

8. Stelleinrichtung nach einem der Ansprüche 1 bis 7,
dadurch gekennzeichnet, daß der Hebel (10) eine sich in Richtung der Schwenkachse (19) erstreckende Lagermul de (12) aufweist, die eine zugeordnete Lagerkuppe (15) des Gehäuses (1) vorzugsweise allseitig übergreift, wobei die Lagermulde (12) und die Lagerkuppe (15) vorzugsweise eine Art "Schneidenlager" bilden.

9. Stelleinrichtung nach einem der Ansprüche 1 bis 8,
dadurch gekennzeichnet, daß der Hebel (10) als zweiarmiger Hebel ausgebildet ist, an dessen einem Ende das Reibrad (5) und an dessem anderen Ende (17) die Aufnahmeöffnung (18) mit dem sie durchragenden Stellbolzen (23) angeordnet ist.

10. Stelleinrichtung nach einem der Ansprüche 5 bis 9,
dadurch gekennzeichnet, daß der Ringflansch (33) unter einem vom 90 Grad abweichenden Winkel (41) zur Mittelachse (21) der Aufnahmebohrung (18) liegt.

Fig. 1

Fig. 2

EP 0 393 483 A2

**Fig. 3**

**Fig. 4**

**Fig. 5**